# EUROPÄISCHE PATENTANMELDUNG

(11) **EP 4 549 174 A1**
(43) Veröffentlichungstag der Anmeldung: **07.05.2025**
(21) Anmeldenummer: 24201946.1
(22) Anmeldetag: 23.09.2024
(51) Int. Cl.: B60C 23/04, B60R 25/10

(54) **REIFENSENSOR BASIERTES VERFAHREN ZUR DETEKTION EINES REIFENVERLUSTS, INSBESONDERE EINES REIFENDIEBSTAHLS**

(30) Priorität: 30.10.2023 DE 102023210762
(71) Anmelder: Continental Reifen Deutschland GmbH, 30175 Hannover (DE)
(72) Erfinder: Lehmann, Jörg, 30175 Hannover (DE); Sahlmüller, Baldo, 30175 Hannover (DE); James, Akhil, 4050-478 Porto (PT); Nettelmann, Marc, 30175 Hannover (DE); Groffmann, Lena, 30175 Hannover (DE); Jaedicke, Jessica, 30175 Hannover (DE)
(74) Vertreter: Continental Corporation

(57) **Zusammenfassung**

Die Erfindung betrifft ein Verfahren zur Detektion eines Reifenverlusts in einem Überwachungssystem (10), mit folgenden Schritten: a) Senden von Signalen mit elektronischen Sendeeinheiten (16) von an einem Systemfahrzeug (12) angeordneten Systemfahrzeugreifen (14) über d eine Kommunikationseinheit (18) an die zentrale elektronische Datenverarbeitungseinrichtung (22), b) Auswerten der von den elektronischen Sendeeinheiten (16) eines Systemfahrzeugs (12) empfangenen Signale mit der zentralen elektronischen Datenverarbeitungseinrichtung (20) zur Detektion eines möglichen Verlusts eines dem Systemfahrzeug (12) zugeordneten Systemfahrzeugreifens (14), und c) Auslösen einer Reaktionsmaßnahme (26) durch eine zentrale elektronische Datenverarbeitungseinrichtung (22), wenn die Auswertung den Verlust eines dem Systemfahrzeug (12) zugeordneten Systemfahrzeugreifens (14) detektiert, wobei der Verlust eines dem Systemfahrzeug (12) zugeordneten Systemfahrzeugreifens (14) detektiert wird, wenn eine Kommunikationseinheit (18), welche die Signale eines Teils der dem Systemfahrzeug (12) zugeordneten elektronischen Sendeeinheiten (16) empfängt, die Signale zumindest einer weiteren, dem Systemfahrzeug (12) zugeordneten elektronischen Sendeeinheit (16) nicht empfängt oder mit einer Signalintensität empfängt, welche zumindest um einen vorbestimmten Dämpfungsfaktor verringert ist.

## Beschreibung

Die Erfindung betrifft ein Verfahren zur Detektion eines Reifenverlusts, insbesondere eines Reifendiebstahls, in einem Überwachungssystem und ein Überwachungssystem, insbesondere für den Einsatz in einem entsprechenden Verfahren.

Die fortschreitende technische Entwicklung und die zunehmende Digitalisierung betreffen insbesondere auch den Bereich der Fahrzeugtechnik und der Fahrzeugreifen. Es besteht ein fortgesetztes Interesse daran, bei den in Fahrzeugen eingesetzten Komponenten fortlaufend Leistungsdaten zu erfassen, um beispielsweise die Leistungsfähigkeit und Betriebssicherheit kontinuierlich zu überwachen. Zu den Informationen, die bei Fahrzeugreifen überwacht werden können, gehören beispielsweise der Reifendruck und die Reifentemperatur. Hierzu werden Fahrzeugreifen heutzutage mit geeigneten Sensoren bestückt.

Ungeachtet des technischen Fortschritts besteht jedoch ein sehr altes Problem nahezu unverändert weiter. Insbesondere bei großen Fahrzeugflotten kommt es immer wieder zu einem Verlust von Reifen, sei es durch Unachtsamkeit oder durch Diebstahl.

Insbesondere für die Flottenmanager großer Fahrzeugflotten wäre es wünschenswert, Möglichst frühzeitig eine Information zu erhalten, wenn der Verlust eines Fahrzeugreifens zu befürchten ist, wobei es insbesondere wünschenswert wäre, dass das entsprechende Backend, d.h. die Datenbank, in der die Informationen über den Reifenbestand und deren Eigenschaften sowie über deren Zuordnung zu den Fahrzeugend der Fahrzeugflotte, automatisch aktualisiert wird, beispielsweise indem ein Verlust registriert und eine entsprechende Beschaffungs- und Ersatzorder an die entsprechenden Arbeitskräfte ergeht.

Eine entsprechende Funktionalität wäre jedoch auch für andere Zielgruppen interessant, insbesondere wenn es möglich wäre, einen abhandengekommenen Fahrzeugreifen zu lokalisieren, beispielsweise für Privatkunden oder Strafverfolgungsbehörden.

Insoweit im Stand der Technik überhaupt Verfahren zur automatisierten Detektion eines Reifenverlusts bekannt sind, werden diese nach Einschätzung der Erfinder vielen der an solche Verfahren gestellten Anforderungen nicht gerecht.

Die primäre Aufgabe der vorliegenden Erfindung war es, die Nachteile des Standes der Technik auszuräumen oder zumindest zu verringern.

Insbesondere war es eine Aufgabe der vorliegenden Erfindung, Verfahren zur Detektion eines Reifenverlusts, insbesondere eines Reifendiebstahls, in einem Überwachungssystem sowie ein für die Durchführung des Verfahrens ausgelegtes Überwachungssystem anzugeben, mit welchem eine automatisierte Detektion eines Reifenverlusts in zuverlässiger Weise möglich ist, wobei die Detektion wünschenswerterweise möglichst frühzeitig möglich sein sollte.

Hierbei war es eine Aufgabe der vorliegenden Erfindung, dass das anzugebende Verfahren möglichst zeit- und kosteneffizient betreibbar sein sollte.

Zudem war es eine Aufgabe der vorliegenden Erfindung, dass das anzugebende Verfahren möglichst weitgehend unter Nutzung solcher Komponenten ausführbar sein sollte, welche in Modernen Fahrzeugsystemen ohnehin vorliegen, so dass insbesondere keine Aufwendige zusätzliche Elektronik erforderlich sein sollte.

Insoweit war es eine Aufgabe der vorliegenden Erfindung, dass das anzugebende Verfahren möglichst energieeffizient betreibbar sein sollte, wobei es eine wichtige Maßgabe war, dass der Einsatz des Verfahrens die Lebensdauer bzw. Haltbarkeit der Komponenten des Fahrzeugsystems nicht bzw. in möglichst geringem Umfang, verringern sollte.

Darüber hinaus war es eine Aufgabe der vorliegenden Erfindung, dass das anzugebende Verfahren neben der Detektion des bloßen Reifenverlusts idealerweise auch in der Lage sein, eine Information über die Position des verlorenen Fahrzeugreifens bereitzustellen, um dessen Wiederbeschaffung zu ermöglichen.

Es war eine weitere Aufgabe der vorliegenden Erfindung, dass das anzugebende Verfahren in der Lage sein sollte, im Falle eines Reifenverlusts automatisiert eine optimierte Reaktion auszulösen, wobei es insbesondere wünschenswert war, dass das anzugebende Verfahren eine automatisierte Pflege des Datenbestandes eines Flottenmanagementsystems leisten können sollte.

Die Erfinder der vorliegenden Erfindung haben nunmehr gefunden, dass sich die vorstehenden Aufgaben lösen lassen, wenn die in modernen Fahrzeugreifen verbaute Sensorik im Zusammenspiel mit den in einem zentralen Speicher hinterlegten Zuordnungsinformationen zur Verteilung der Fahrzeugreifen auf die Fahrzeuge, genutzt wird, um in den von den Fahrzeugreifen eines Fahrzeuges gesendeten Signalen eine Abweichung vom Erwartungswert zu registrieren, um aus der Abwesenheit oder Abschwächung von Signalen auf das Fehlen von Fahrzeugreifen zu schließen und infolgedessen eine Reaktionsmaßnahme auszulösen, wie es in den Ansprüchen definiert ist.

Hierdurch ist es in zeit- und kosteneffizienter Weise möglich, einen Reifenverlust zuverlässig und automatisiert schon frühzeitig zu detektieren, wobei in vorteilhafter Weise auf zumeist ohnehin vorliegende Elektronik zurückgegriffen werden kann, wobei es den Erfindern insbesondere gelungen ist, bevorzugte Betriebsweisen zu identifizieren, mit denen die Lebensdauer bzw. Haltbarkeit der Komponenten des Fahrzeugsystems nicht bzw. in möglichst geringem Umfang, verringert wird sowie bei Bedarf eine Information über die Position des verlorenen Fahrzeugreifens zu erhalten.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Überwachungssysteme ergeben sich aus den Merkmalen bevorzugter Verfahren.

Die Erfindung betrifft ein Verfahren zur Detektion eines Reifenverlusts, insbesondere eines Reifendiebstahls, in einem Überwachungssystem, wobei das Überwachungssystem umfasst:
i) ein oder mehrere Systemfahrzeuge, umfassend jeweils eine Mehrzahl von Systemfahrzeugreifen, wobei jeder Systemfahrzeugreifen eine elektronische Sendeeinheit zum Senden von Signalen in einem drahtlosen Übertragungsverfahren umfasst,
ii) zumindest eine von den Systemfahrzeugen separate Kommunikationseinheit, wobei die Kommunikationseinheit dazu eingerichtet ist, in dem drahtlosen Übertragungsverfahren die Signale von in einem Kontrollbereich befindlichen elektronischen Sendeeinheiten der Systemfahrzeugreifen zu empfangen, und
iii) eine zentrale elektronische Datenverarbeitungseinrichtung, umfassend eine zentrale Speichereinheit, wobei auf der zentralen Speichereinheit Zuordnungsinformationen über die Zuordnung der elektronischen Sendeeinheiten der Systemfahrzeugreifen zu den Systemfahrzeugen gespeichert sind,
wobei das Überwachungssystem dazu eingerichtet ist, dass im Kontrollbereich befindliche elektronische Sendeeinheiten über die Kommunikationseinheit Signale an die zentrale elektronische Datenverarbeitungseinrichtung senden können, wobei das Verfahren die folgenden Verfahrensschritte umfasst:
a) Senden von Signalen mit den elektronischen Sendeeinheiten der an einem Systemfahrzeug angeordneten Systemfahrzeugreifen über die zumindest eine Kommunikationseinheit an die zentrale elektronische Datenverarbeitungseinrichtung,
b) Auswerten der von den elektronischen Sendeeinheiten eines Systemfahrzeugs empfangenen Signale mit der zentralen elektronischen Datenverarbeitungseinrichtung zur Detektion eines möglichen Verlusts eines dem Systemfahrzeug zugeordneten Systemfahrzeugreifens, und
c) Auslösen einer Reaktionsmaßnahme durch die zentrale elektronische Datenverarbeitungseinrichtung, wenn die Auswertung den Verlust eines dem Systemfahrzeug zugeordneten Systemfahrzeugreifens detektiert,
wobei der Verlust eines dem Systemfahrzeug zugeordneten Systemfahrzeugreifens detektiert wird, wenn eine Kommunikationseinheit, welche die Signale eines Teils der dem Systemfahrzeug zugeordneten elektronischen Sendeeinheiten empfängt, die Signale zumindest einer weiteren, dem Systemfahrzeug zugeordneten elektronischen Sendeeinheit nicht empfängt oder mit einer Signalintensität empfängt, welche zumindest um einen vorbestimmten Dämpfungsfaktor verringert ist.

Das erfindungsgemäße Verfahren dient der Feststellung des Verlusts eines Fahrzugreifens, beispielsweise in Folge eines Reifendiebstahls. Die in dem Verfahren zusammenwirkenden Komponenten werden dabei im Rahmen der vorliegenden Erfindung als Überwachungssystem bezeichnet. Bei dem Überwachungssystem kann es sich beispielsweise um ein Flottenmanagementsystem nebst der eingesetzten Kommunikationsinfrastruktur handeln, welches insbesondere zur Verwaltung von Nutzfahrzeugflotten eingesetzt wird, welche häufig eine große Zahl an Fahrzeugen umfassen, die im Rahmen der vorliegenden Erfindung zur klaren Identifikation und zur Abgrenzung von sonstigen Fahrzeugen als Systemfahrzeuge bezeichnet werden. Beispielhaft ist ein erfindungsgemäßes Verfahren, wobei das Überwachungssystem 5 oder mehr, bevorzugt 10 oder mehr, besonders bevorzugt 20 oder mehr, Systemfahrzeuge umfasst. Beispielhaft ist zusätzlich oder alternativ auch ein erfindungsgemäßes Verfahren, wobei die Systemfahrzeuge Nutzfahrzeuge sind, bevorzugt LKW oder Busse, besonders bevorzugt LKW.

Die Interaktion erfolgt im erfindungsgemäßen Verfahren insbesondere mit den mit integrierter Elektronik ausgerüsteten Fahrzeugreifen der Fahrzeuge, welche im Rahmen der vorliegenden Erfindung zur klaren Identifikation und zur Abgrenzung von sonstigen Fahrzeugreifen, insbesondere nicht mit Elektronik bestückten Fahrzeugreifen, als Systemfahrzeuge bezeichnet werden. Der Fachmann versteht insoweit, dass es zwar möglich ist, dass ein Systemfahrzeug neben Systemfahrzeugreifen auch weitere Fahrzeugreifen umfasst, dass dies jedoch nicht bevorzugt ist.

Die Systemfahrzeuge umfassen jeweils eine Mehrzahl von Systemfahrzeugreifen, wobei es zweckmäßig ist, an jedem Systemfahrzeug eine möglichst große Zahl von Systemfahrzeugreifen vorzusehen, wodurch die Zuverlässigkeit der Detektion des Reifenverlusts gesteigert werden kann. Bevorzugt ist entsprechend ein erfindungsgemäßes Verfahren, wobei die Systemfahrzeuge jeweils 4 oder mehr, bevorzugt 6 oder mehr, Systemfahrzeugreifen umfassen, wobei die Systemfahrzeuge bevorzugt ausschließlich Systemfahrzeugreifen umfassen.

Die Erfinder schlagen vor, dass insbesondere etwaige Reserveräder als Systemfahrzeugreifen ausgeführt werden sollten, da diese in vielen Fällen besonders anfällig für Diebstahl und Verlust sind. Auch Fahrzeugreifen, welche sich auf Lift-Achsen von LKW oder anderen Nutzfahrzeugen befinden, lassen sich in vielen Fällen leichter entwenden. Zudem bleiben der Verlust von Reserverädern bzw. von nicht belasteten Lift-Achsen auch während des Fahrzeugeinsatzes von Fahrzeugführer leichter unbemerkt als der Verlust eines Fahrzeugreifens auf einer belasteten Achse, so dass das erfindungsgemäße Verfahren insbesondere auch im Fahrbetrieb zusätzliche Informationen generieren kann. Bevorzugt ist ein erfindungsgemäßes Verfahren, wobei zumindest einer der Systemfahrzeugreifen ein Reservereifen ist. Bevorzugt ist zusätzlich oder alternativ ein erfindungsgemäßes Verfahren, wobei zumindest einer der Systemfahrzeugreifen auf einer Lift-Achse angeordnet ist.

Im erfindungsgemäßen Verfahren wird ausgenutzt, dass die Systemfahrzeugreifen, bzw. genauer die in diesen verbaute Elektronik, in einem drahtlosen Übertragungsverfahren Signale senden können, wobei die entsprechenden Sendeeinheiten in vielen Fällen auch in der Lage sind, entsprechende Signale zu empfangen. Bevorzugt ist ein erfindungsgemäßes Verfahren, wobei die Systemfahrzeugreifen Fahrzeugluftreifen sind, wobei die elektronische Sendeeinheit an der Reifeninnenschicht befestigt ist, bevorzugt unterhalb des Laufstreifens.

Das erfindungsgemäße Verfahren basiert auf der Auswertung der von den Systemfahrzeugreifen eines Systemfahrzeugs, bzw. den entsprechenden Sendeeinheiten, gesendeten Signalen, bzw. der Detektion von deren Fehlen oder Abschwächung. Es ist dabei zweckmäßig, dass die gesendeten Signale eine Information enthalten, mittels der die Sendeeinheit und damit mittelbar der Systemfahrzeugreifen identifiziert werden kann. Hierfür kann das gesendete Signal beispielsweise eine (zumindest bezogen auf das Überwachungssystem) einzigartige Identifikation umfassen, mittels derer das Signal im Backend einem Systemfahrzeugreifen zuordbar ist. Für im Wesentlichen sämtliche Ausführungsformen bevorzugt ist ein erfindungsgemäßes Verfahren, wobei den elektronischen Sendeeinheiten jeweils eine im Überwachungssystem einzigartige Identifikationsinformation zugeordnet ist, wobei die elektronische Sendeeinheit jedes Systemfahrzeugreifens dazu eingerichtet ist, zumindest in zeitlichen Abständen, die Identifikationsinformation zu senden und/oder wobei das von den elektronischen Sendeeinheiten der Systemfahrzeugreifen gesendete Signal zumindest in zeitlichen Abständen die Identifikationsinformation umfasst.

Um einen größtmöglichen Mehrwert zu erzielen, schlagen die Erfinder vor, dass in den Fahrzeugreifen zusätzlich elektronische Sensoreinheiten vorgesehen werden können, welche der Bestimmung von wichtigen Betriebsgrößen wie beispielsweise der Temperatur oder des Drucks dienen können, wobei die entsprechenden Reifeninformationen in vorteilhafter Weise mit in das erfindungsgemäße Verfahren einbezogen werden können, wie es nachfolgend weiter offenbart wird. Bevorzugt ist somit ein erfindungsgemäßes Verfahren, wobei die Systemfahrzeugreifen jeweils eine elektronische Sensoreinheit zum Detektieren einer Reifeninformation umfassen.

Unter den möglichen Sensorfunktionalitäten ist insbesondere der Einsatz von Drucksensoren bevorzugt, da diese eine Reifeninformation liefern, welche für die Verwaltung von Fahrzeugflotten und die Fahrsicherheit der Fahrzeuge besonders bedeutsam sind. Bevorzugt ist entsprechend ein erfindungsgemäßes Verfahren, wobei die Systemfahrzeugreifen jeweils eine Drucksensoreinheit zum Detektieren einer dem jeweiligen Systemfahrzeugreifen zugeordneten Druckinformation umfassen. In diesem Fall handelt es sich um ein erfindungsgemäßes Verfahren, wobei das Überwachungssystem ein Reifendrucküberwachungssystem ist.

Bei Vorliegen einer entsprechenden Sensorfunktionalität ist es zweckmäßig, dass die detektierte Sensorinformation über die elektronischen Sendeeinheit gesendet wird. Besonders bevorzugt ist es vor diesem Hintergrund auch, die Sendeeinheit und die Sensoreinheit in ein einzelnes elektronisches Bauteil zu integrieren. Bevorzugt ist folglich ein erfindungsgemäßes Verfahren, wobei die elektronische Sendeeinheit jedes Systemfahrzeugreifens dazu eingerichtet ist, zumindest in zeitlichen Abständen, die detektierte Reifeninformation, bevorzugt die detektierte Druckinformation, zu senden und/oder wobei das von jedem Systemfahrzeugreifen gesendete Signal zumindest in zeitlichen Abständen die Reifeninformation, bevorzugt die Druckinformation, umfasst. Bevorzugt ist zusätzlich oder alternativ ein erfindungsgemäßes Verfahren, wobei die elektronische Sensoreinheit, bevorzugt die Drucksensoreinheit, und die elektronische Sendeeinheit durch die gleiche elektronische Baueinheit gebildet werden.

Das erfindungsgemäße Verfahren nutzt die Auswertung der von den Systemfahrzeugreifen eines Systemfahrzeugs, bzw. den entsprechenden Sendeeinheiten, gesendeten Signalen. Dadurch ist die zeitliche Auflösung, mit der das Fehlen eines Fahrzeugreifens detektiert werden kann, inhärent abhängig von der Rate, mit der die Sendeeinheiten Signale senden. Die Erfinder schlagen deshalb vor, dass die senderate nicht zu groß gewählt werden sollte. Gleichzeitig korreliert eine große Senderate auch mit einem hohen Energieverbrauch, was insbesondere dann für die Lebenszeit nachteilig ist, wenn keine interne Vorrichtung zur Energiegewinnung vorgesehen wird, wie es nachfolgendweiter offenbart wird. Bevorzugt ist zunächst ein erfindungsgemäßes Verfahren, wobei die elektronischen Sendeeinheiten jedes Systemfahrzeugs dazu eingerichtet sind, in einem Intervall von 400 s oder weniger, bevorzugt von 300 s oder weniger, besonders bevorzugt 200 s oder weniger, zumindest einmal zu senden, wobei die elektronischen Sendeeinheiten jedes Systemfahrzeugs besonders bevorzugt dazu eingerichtet sind, im Wesentlichen zeitgleich zu senden, und/oder wobei das Senden von Signalen in Verfahrensschritt a) so erfolgt, dass sämtliche elektronischen Sendeeinheiten des Systemfahrzeugs in einem Intervall von 400 s oder weniger, bevorzugt von 300 s oder weniger, besonders bevorzugt 200 s oder weniger, zumindest einmal senden. Bevorzugt ist zusätzlich oder alternativ auch ein erfindungsgemäßes Verfahren, wobei die elektronischen Sendeeinheiten dazu eingerichtet sind, in vorbestimmten Abständen Signale an die zentrale elektronische Datenverarbeitungseinrichtung zu senden, bevorzugt in Abständen von 400 s oder weniger, bevorzugt von 300 s oder weniger, besonders bevorzugt 200 s oder weniger, und/oder wobei das Senden von Signalen in Verfahrensschritt a) in vorbestimmten Abständen erfolgt, bevorzugt in Abständen von 400 s oder weniger, bevorzugt von 300 s oder weniger, besonders bevorzugt 200 s oder weniger. Bevorzugt ist wiederum zusätzlich oder alternativ ein erfindungsgemäßes Verfahren, wobei die elektronischen Sendeeinheiten dazu eingerichtet sind, in vorbestimmten Abständen Signale an die zentrale elektronische Datenverarbeitungseinrichtung zu senden, bevorzugt in Abständen von 10 s oder mehr, besonders bevorzugt 50 s oder mehr, ganz besonders bevorzugt 100 s oder mehr, und/oder wobei das Senden von Signalen in Verfahrensschritt a) in vorbestimmten Abständen erfolgt, bevorzugt in Abständen von 10 s oder mehr, besonders bevorzugt 50 s oder mehr, ganz besonders bevorzugt 100 s oder mehr.

Neben der Senderate können für das Senden auch weitere Rahmenparameter eingestellt werden, beispielsweise ein Synchronisierung des Senden oder ein anforderungsbasiertes Senden in Folge eines Trigger-Signals, wobei solche Maßnahmen eher für spezifische Anwendungen interessant sind, insbesondere wenn die Sendeeinheiten im Normalbetrieb mit einer sehr niedrigen Senderate senden würden, welche die zeitliche Auflösung des erfindungsgemäßen Verfahrens zu stark reduzieren würde. Eher für spezielle Anwendungen bevorzugt ist somit ein erfindungsgemäßes Verfahren, wobei die elektronischen Sendeeinheiten jedes Systemfahrzeugs ein zumindest teilweise, bevorzugt im Wesentlichen vollständig, synchronisiertes Sendeschema aufweisen, und/oder wobei jedes Systemfahrzeug dazu eingerichtet ist, ein synchrones Senden von Signalen der elektronischen Sendeeinheiten des Systemfahrzeugs zu bewirken, bevorzugt durch Aussenden eines Trigger-Signals an die elektronischen Sendeeinheiten.

In Übereinstimmung mit dem fachmännischen Verständnis benötigen die elektronischen Sendeeinheiten zum Senden der Signale Energie. Diese Energie kann prinzipiell über einen Energiespeicher, beispielsweise eine Knopfbatterie, bereitgestellt werden. Da entsprechenden Energiespeicher im Inneren des Fahrzeugreifens häufig nicht in ökonomischer Weise ausgetauscht werden können stellt die Kapazität der Energiespeicher eine inhärente Grenze für die Lebensdauer der Sendeeinheit bzw. der integrierten Sensoreinheiten dar. Für einen Großteil der Anwendungen relevant ist ein erfindungsgemäßes Verfahren, wobei die Systemfahrzeugreifen zumindest teilweise, bevorzugt sämtlich, einen Energiespeicher zur Versorgung der elektronischen Sendeeinheiten mit elektrischer Energie umfasst.

Um den Energiespeicher zu schonen, ist es bevorzugt, dass erfindungsgemäße Verfahren in Abwesenheit von alternativen Energiequellen derart auszuführen, dass eine vergleichsweise nahreichweitige Kommunikation erfolgt, beispielsweise mit einer standortbasierten Kommunikationsinfrastruktur wie sie beispielsweise unter dem Handelsnamen ContiConnect Yard verfügbar ist, wie es nachfolgend weiter offenbart wird. Nach Einschätzung der Erfinder ist es aber für viele Anwendungen eigentlich bevorzugt, wenn das Verfahren auch außerhalb eines lokalen Kontrollbereichs durchgeführt werden kann, was regelmäßig die Nutzung von relativ langreichweitigen Übertragungstechnologien und die Nutzung bestehender Funknetze erfordern wird. Diese Ausgestaltung ist jedoch energieintensiver. Um trotzdem vorteilhafte Lebenszeiten der im Systemfahrzeugreifen eingesetzten Elektronik zu erhalten, schlagen die Erfinder vor, dass in den Systemfahrzeugreifen sogenannte "Energieharvester" eigesetzt werden können. Entsprechende Bauteile sind von verschiedenen Herstellern kommerziell erhältlich und erlauben es, die von Systemfahrzeugreifen im Betrieb erfahrene mechanische Belastung in nutzbare elektrische Energie umzuwandeln. Bevorzugt ist insbesondere in Kombination mit einem langreichweitigen drahtlosen Übertragungsverfahren unter Nutzung bestehender externer Funknetze somit ein erfindungsgemäßes Verfahren, wobei die Systemfahrzeugreifen zumindest teilweise, bevorzugt sämtlich, eine Energiegewinnungseinrichtung zur Versorgung der elektronischen Sendeeinheiten mit elektrischer Energie und/oder zur Aufladung eines Energiespeichers umfasst, wobei die Energiegewinnungseinrichtung dazu eingerichtet ist, in Folge der Verformung des Systemfahrzeugreifens elektrische Energie zu gewinnen. Beispielhaft ist dabei ein erfindungsgemäßes Verfahren, wobei die Energiegewinnungseinrichtung an der Reifeninnenschicht befestigt ist, bevorzugt unterhalb des Laufstreifens. Beispielhaft ist zusätzlich oder alternativ auch ein erfindungsgemäßes Verfahren, wobei die Energiegewinnungseinrichtung eine piezoelektrische oder elektromechanische Energiegewinnungseinrichtung ist.

Die von den Systemfahrzeugreifen gesendeten Signale werden mit einer außerhalb des Systemfahrzeugs befindlichen Kommunikationseinheit empfangen und an die zentrale elektronische Datenverarbeitungsvorrichtung übermittelt. Für im Wesentlichen alle Ausführungsformen relevant ist dabei ein erfindungsgemäßes Verfahren, wobei die Kommunikationseinheit eine ortsfeste Kommunikationseinheit ist. Bevorzugt ist insoweit ein erfindungsgemäßes Verfahren, wobei zumindest eine der Kommunikationseinheiten, bevorzugt sämtliche Kommunikationseinheiten des Überwachungssystems, ein Funkmast ist. Im Rahmen der vorliegenden Erfindung bezeichnet der Ausdruck "Kontrollbereich" die Fläche, in der eine Kommunikationseinheit, beispielsweise ein Funkmast, die Signale der Sendeeinheiten noch empfangen bzw. diese zwischen weiteren Signalen hinreichend auflösen kann. Die absoluten Abmessungen des Kontrollbereichs werden damit in Abhängigkeit von der eingesetzten Übertragungstechnologie und den in der Kommunikationsinfrastruktur sowie den Sendeeinheiten verbauten Komponenten abhängen. Die Definition des Kontrollbereiches erlaubt es in vorteilhafter Weise aber zwischen kurzreichweitigen Übertragungstechnologien, welche beispielsweise nur das Betriebsgelände eines Fuhrparkbetreibers abdecken sollen, und langreichweitigeren Technologien, wie sie beispielsweise aus dem Mobilfunk bekannt sind, zu unterscheiden, wobei erstere in vorteilhafter Weise für die Kombination mit ausschließlich batteriegestützten Sendeeinheiten geeignet ist, wohingegen die zweite Variante insbesondere beim Einsatz von integrierten Energiegewinnungseinrichtungen in einem vorteilhaften Verfahren resultiert.

Bevorzugt ist somit zum einem ein erfindungsgemäßes Verfahren, wobei das Überwachungssystem eine Vielzahl von räumlich voneinander separierten Kommunikationseinheiten umfasst, bevorzugt 100 oder mehr, besonders bevorzugt 200 oder mehr, besonders bevorzugt 500 oder mehr, wobei der mittlere Abstand zwischen benachbarten Kommunikationseinheiten 100 m oder mehr, bevorzugt 200 m oder mehr, besonders bevorzugt 300 m oder mehr, beträgt, und/oder wobei sich der Kontrollbereich der Kommunikationseinheit im Wesentlichen kreisförmig mit einem Radius r um die Kommunikationseinheit herum erstreckt, wobei r 100 m oder mehr, bevorzugt 200 m oder mehr, besonders bevorzugt 300 m oder mehr, beträgt. Besonders bevorzugt ist gerade in diesem Fall hinsichtlich der Übertragungstechnologie ein erfindungsgemäßes Verfahren, wobei das drahtlose Übertragungsverfahren ausgewählt ist aus der Gruppe bestehend aus 3G, 4G, 5G, Sigfox, LoRaWAN und Narrowband IOT, bevorzugt Sigfox, LoRaWAN und Narrowband IOT, besonders bevorzugt Sigfox und Narrowband IOT.

Bevorzugt ist mit Blick auf die eher lokale Lösung alternativ ein erfindungsgemäßes Verfahren, wobei das Überwachungssystem 15 oder weniger, besonders bevorzugt 10 oder weniger, besonders bevorzugt 5 oder weniger, insbesondere bevorzugt lediglich eine Kommunikationseinheit umfasst, und wobei der mittlere Abstand zwischen benachbarten Kommunikationseinheiten 75 m oder weniger, bevorzugt 50 m oder weniger, besonders bevorzugt 25 m oder weniger, beträgt, und/oder wobei sich der Kontrollbereich der Kommunikationseinheit im Wesentlichen kreisförmig mit einem Radius r um die Kommunikationseinheit herum erstreckt, wobei r bevorzugt im Bereich von 1 bis 50 m, besonders bevorzugt im Bereich von 2 bis 20m, liegt. Besonders bevorzugt ist gerade in diesem Fall hinsichtlich der Übertragungstechnologie ein erfindungsgemäßes Verfahren, wobei das drahtlose Übertragungsverfahren ausgewählt ist aus der Gruppe bestehend aus einem Funk-Verfahren mit einer Frequenz von 433 MHz oder Bluetooth, bevorzugt Bluetooth.

Gerade bei der vorstehend offenbarten lokaleren Lösung mit kurzreichweitigeren Übertragungstechnologien ist es möglich, das Senden der Signale an den Eintritt des jeweiligen Systemfahrzeuges in den Kontrollbereich zu koppeln, beispielsweise wenn ein entsprechendes Systemfahrzeug auf ein Betriebsgelände fährt, welches von einem System des Typs "ContiConnect Yard" abgedeckt wird. Bevorzugt ist in diesem Fall ein erfindungsgemäßes Verfahren, wobei die elektronischen Sendeeinheiten dazu eingerichtet sind, bei Eintreten in den Kontrollbereich einer Kommunikationseinheit ein Signal an die zentrale elektronische Datenverarbeitungseinrichtung zu senden, bevorzugt in Folge eines von der Kommunikationseinheit übermittelten Auslösesignals, und/oder wobei das Senden von Signalen in Verfahrensschritt a) beim Eintreten in den Kontrollbereich einer Kommunikationseinheit erfolgt, bevorzugt in Folge eines von der Kommunikationseinheit übermittelten Auslösesignals.

Zum zwecke der Auswertung werden die von der Kommunikationseinheit empfangenen Signale an eine zentrale elektronische Datenverarbeitungseinrichtung übermittelt, bei der es sich beispielsweise um den Computer eines Flottenmanagementsystems handeln kann. Beispielhaft ist ein erfindungsgemäßes Verfahren, wobei die Kommunikationseinheit signalleitend mit der zentralen elektronischen Datenverarbeitungseinrichtung verbunden ist. Beispielhaft ist zusätzlich oderalternativ ein erfindungsgemäßes Verfahren, wobei die Kommunikationseinheit über ein drahtloses Kommunikationsverfahren mit der elektronischen Datenverarbeitungseinrichtung kommuniziert.

Die elektronische Datenverarbeitungseinrichtung nebst der Speichereinheit kann prinzipiell durch eine beliebige kommerziell verfügbare Datenverarbeitungseinrichtung gebildet werden, welche durch entsprechende Programmierung erfindungsgemäß eingerichtet werden kann. Nach Einschätzung der Erfinder ist es jedoch besonders vorteilhaft, wenn die zentrale elektronische Datenverarbeitungseinrichtung über eine Cloud bereitgestellt wird. Bevorzugt ist ein erfindungsgemäßes Verfahren, wobei die zentrale elektronische Datenverarbeitungseinrichtung durch einen physischen Server oder einen virtuellen Server gebildet wird, bevorzugt durch einen virtuellen Server, besonders bevorzugt durch eine Cloud.

Auf der zentralen Speichereinheit sind Zuordnungsinformationen über die Zuordnung der elektronischen Sendeeinheiten der Systemfahrzeugreifen zu den Systemfahrzeugen gespeichert. Hierdurch ist es der elektronischen Datenverarbeitungseinrichtung möglich, bei Empfang eines Signals einer oder mehrerer elektronischer Sendeeinheiten der Systemfahrzeugreifen eines spezifischen Systemfahrzeugs abzuleiten, welche weiteren Signale von anderen Systemfahrzeugreifen im Rahmen des von den Sendeeinheiten vorgegebenen Sendeintervalls ebenfalls empfangen werden sollten. In bevorzugten Ausgestaltungen ist es dabei möglich, sogar die Reifenpositionen, welche die Systemfahrzeugreifen am Systemfahrzeug besetzen, nachzuhalten. Bevorzugt ist entsprechend ein erfindungsgemäßes Verfahren, wobei die Zuordnungsinformationen Informationen über die Zuordnung der Systemfahrzeugreifen zu den Reifenplätzen der Systemfahrzeuge umfasst.

Im Rahmen der vorliegenden Erfindung wird hinsichtlich der Detektion des Verlusts eines Systemfahrzeugreifens definiert, dass ein Verlust als solcher detektiert wird, wenn eine Kommunikationseinheit, welche die Signale eines Teils der dem Systemfahrzeug zugeordneten elektronischen Sendeeinheiten empfängt, die Signale zumindest einer weiteren, dem Systemfahrzeug zugeordneten elektronischen Sendeeinheit nicht empfängt oder mit einer Signalintensität empfängt, welche zumindest um einen vorbestimmten Dämpfungsfaktor verringert ist. Bevorzugt ist dabei ein erfindungsgemäßes Verfahren, wobei der Verlust eines dem Systemfahrzeug zugeordneten Systemfahrzeugreifens detektiert wird, wenn eine Kommunikationseinheit bis auf ein Signal, sämtliche Signale der dem Systemfahrzeug zugeordneten elektronischen Sendeeinheiten empfängt.

Insoweit wird neben dem gänzlichen Fehlen des Signals auch der Fall abgedeckt, dass das Signal nur mit einer verringerten Intensität gemessen wird. Hierdurch ist es in vorteilhafter Weise möglich, den Verlust schon dann zu detektieren, wenn sich der verlorene Systemfahrzeugreifen noch relativ nah am Systemfahrzeug befindet, wodurch eine besonders schnelle Reaktion möglich ist. Zur Vermeidung von Fehlalarmen, beispielsweise in Folge von mit der Zeit schwächer werdenden Sensoren, ist es dabei zweckmäßig, dass zur Auslösung benötigte Maß der Dämpfung nicht zu niedrig zu wählen. Bevorzugt ist insoweit nach Einschätzung der Erfinder ein erfindungsgemäßes Verfahren, wobei der Verlust eines dem Systemfahrzeug zugeordneten Systemfahrzeugreifens detektiert wird, wenn die Signale zumindest einer weiteren, bevorzugt genau einer weiteren, dem Systemfahrzeug zugeordneten elektronischen Sendeeinheiten nicht oder mit einer um einen vorbestimmten Dämpfungsfaktor von 75 % oder mehr verringerten Signalintensität, bevorzugt nicht oder mit einer um einen vorbestimmten Dämpfungsfaktor von 90 % oder mehr verringerten Signalintensität, besonders bevorzugt nicht oder mit einer um einen vorbestimmten Dämpfungsfaktor von 99 % oder mehr verringerten Signalintensität, ganz besonders bevorzugt nicht, empfangen werden.

Es kann als Vorteil des erfindungsgemäßen Verfahrens gesehen werden, dass die Feststellung des Verlustes eine Systemfahrzeugreifens durch die elektronische Datenverarbeitungseinrichtung optional an weitere Randbedingungen gekoppelt werden kann, wobei es insbesondere möglich ist, Fehlalarme zu vermeiden und/oder eine frühere Detektion zu ermöglichen. Beispielsweise kann eine Verlustmeldung bei geringen Unterschieden in der Signalintensität an die Bedingung gebunden werden, dass der mutmaßlich verlorene Systemfahrzeugreifen eine Riefeninformation übermittelt, die auf eine abweichende Rotationsgeschwindigkeit schließen lässt. Mit anderen Worten kann der vorbestimmte Dämpfungsfaktor herabgesetzt werden, wenn bei geringen Unterschieden in der Signalintensität vorgegebene Grenzwerte in den Unterschieden der übermittelten Reifeninformationen bestehen, beispielsweise hinsichtlich der Reifentemperatur. Bevorzugt ist ein erfindungsgemäßes Verfahren, wobei die Systemfahrzeugreifen des Systemfahrzeugs eine elektronische Sensoreinheit zum Detektieren einer Reifeninformation umfassen, bevorzugt einen Beschleunigungssensor oder einen Geschwindigkeitssensor, wobei der vorbestimmte Dämpfungsfaktor verringert wird, wenn die für einen Systemfahrzeugreifen detektierte Reifeninformation, bevorzugt die detektierte Radialbeschleunigung oder die Drehzahl, um mehr als einen vorgegebenen Toleranzwert abweicht.

Das erfindungsgemäße Verfahren erlaubt es durch die Nutzung einer vom Fahrzeug separaten Kommunikationseinheit in vorteilhafter Weise, die Position eines verlorenen Fahrzeugreifens bzw. zumindest den Ort des Verlustes räumlich einzugrenzen. In besonders effizienten Ausgestaltungen ist dies dadurch möglich, dass die Position der Kommunikationseinheit, welche die Signale des verlorenen Systemfahrzeugreifens und/oder der verbliebenen Systemfahrzeugreifen detektiert bekannt ist. In technisch in vielen Fällen aufwendigeren Ausgestaltungen ist es dabei zudem denkbar, beispielsweise mittels Triangulation eine genauere Positionsbestimmung vorzunehmen. Bevorzugt ist ein erfindungsgemäßes Verfahren, wobei das Überwachungssystem dazu eingerichtet ist, die Position der elektronischen Sendeeinheiten, bevorzugt der elektronischen Sendeeinheiten der als verloren detektierten Systemfahrzeugreifen, auf Basis der gesendeten Signale der elektronischen Sendeeinheiten zu bestimmen oder abzuschätzen. Bevorzugt ist ein erfindungsgemäßes Verfahren, wobei die Abschätzung der Position der elektronischen Sendeeinheiten aus der Position der Kommunikationseinheit erfolgt, welche das Signal der elektronischen Sendeeinheit empfängt beziehungsweise mit der größten Signalstärke empfängt. Aufwändiger und eher für spezifische Ausführungsformen relevant ist zusätzlich oder alternativ ein erfindungsgemäßes Verfahren, wobei die Bestimmung der Position der elektronischen Sendeeinheiten mittels Triangulation unter Rückgriff auf drei oder mehr Kommunikationseinheit erfolgt.

Das erfindungsgemäße Verfahren sieht vor, dass durch die zentrale elektronische Datenverarbeitungseinrichtung eine Reaktionsmaßnahme ausgelöst wird, wenn der Verlust eines Systemfahrzeugreifens detektiert wird. Diese Reaktionsmaßnahme kann dabei vom Fachmann bedarfsgerecht ausgewählt werden. Bevorzugt ist ein erfindungsgemäßes Verfahren, wobei die Reaktionsmaßnahme ausgewählt ist aus der Gruppe bestehend aus der Ausgabe eines Warnsignals, bevorzugt eines optischen und/oder akustischen Warnsignals, einer Information der zuständigen Arbeitskräfte, beispielsweise per E-Mail oder SMS, der Aktualisierung der auf der zentralen Speichereinheit gespeicherten Zuordnungsinformationen und der Information von Sicherheitsbehörden, bevorzugt der Ausgabe eines optischen oder akustischen Warnsignals. Hierbei ist es besonders bevorzugt, wenn zumindest die auf der zentralen Speichereinheit gespeicherten Zuordnungsinformationen automatisiert aktualisiert werden.

Es kann als weiterer Vorteil des erfindungsgemäßen Verfahrens gesehen werden, dass dieses in vorteilhafterweise mit einem nahreichweitigen, drahtlosen Kommunikationsnetzwerk, welches zwischen den Sendeeinheiten -welche in diesem Fall zwangsläufig auch eine Empfangsfunktion besitzen- besteht, kombiniert werden kann. Hierbei kann die Ausführung des erfindungsgemäßen Verfahrens an die Bedingung gekoppelt werden, dass einer der Systemfahrzeugreifen in dem nahreichweitigen, drahtlosen Kommunikationsnetzwerk nicht mehr detektiert wird. Dies ist insbesondere dann vorteilhaft, wenn das Senden im erfindungsgemäßen Verfahren mit einer bevorzugt langreichweitigeren Übertragungstechnologie erfolgt, welche von der im Kommunikationsnetzwerk verwendeten Übertragungstechnologie abweicht, da es hierdurch möglich wird, den auf Grundlage einer Technologie aufgetretenen Verdacht eines verlorenen Systemfahrzeugreifens mittels einer zweiten Technologie zu verifizieren, wobei es in vorteilhafter Weise möglich wird, denn Ausfall der nahreichweitigen Sendevorrichtung im Systemfahrzeugreifen als Fehlerursache auszuschließen. Bevorzugt ist für bestimmte Anwendungen ein erfindungsgemäßes Verfahren, wobei die Systemfahrzeugreifen des Systemfahrzeugs untereinander zumindest teilweise, bevorzugt sämtlich, in einem nahreichweitigen, drahtlosen Kommunikationsnetzwerk kommunizieren, bevorzugt in einem Bluetooth-Mesh, wobei das Überwachungssystem dazu eingerichtet ist, die Verfahrensschritte des Verfahrens auszuführen, wenn die Systemfahrzeugreifen im drahtlosen Kommunikationsnetzwerk für eine vorgegeben Zeitspanne von einem oder mehreren der Systemfahrzeugreifen kein Kommunikationssignal empfangen haben.

Die Erfindung betrifft überdies ein Überwachungssystem, insbesondere für den Einsatz in einem erfindungsgemäßen Verfahren, umfassend:
i) ein oder mehrere Systemfahrzeuge, umfassend jeweils eine Mehrzahl von Systemfahrzeugreifen, wobei jeder Systemfahrzeugreifen eine elektronische Sendeeinheit zum Senden von Signalen in einem drahtlosen Übertragungsverfahren umfasst,
ii) zumindest eine von den Systemfahrzeugen separate Kommunikationseinheit, wobei die Kommunikationseinheit dazu eingerichtet ist, in dem drahtlosen Übertragungsverfahren die Signale von in einem Kontrollbereich befindlichen elektronischen Sendeeinheiten der Systemfahrzeugreifen zu empfangen, und
iii) eine zentrale elektronische Datenverarbeitungseinrichtung, umfassend eine zentrale Speichereinheit, wobei auf der zentralen Speichereinheit Zuordnungsinformationen über die Zuordnung der elektronischen Sendeeinheiten der Systemfahrzeugreifen zu den Systemfahrzeugen gespeichert sind,

wobei das Überwachungssystem dazu eingerichtet ist, dass im Kontrollbereich befindliche elektronische Sendeeinheiten über die Kommunikationseinheit Signale an die zentrale elektronische Datenverarbeitungseinrichtung senden können,
wobei die zentrale elektronische Datenverarbeitungseinrichtung dazu eingerichtet ist, die von den elektronischen Sendeeinheiten eines Systemfahrzeugs empfangenen Signale auszuwerten und einen möglichen Verlust eines dem Systemfahrzeug zugeordneten Systemfahrzeugreifens zu detektieren, wobei der Verlust eines dem Systemfahrzeug zugeordneten Systemfahrzeugreifens detektiert wird, wenn eine Kommunikationseinheit, welche die Signale eines Teils der dem Systemfahrzeug zugeordneten elektronischen Sendeeinheiten empfängt, die Signale zumindest einer weiteren, dem Systemfahrzeug zugeordneten elektronischen Sendeeinheit nicht empfängt oder mit einer Signalintensität empfängt, welche um 50 % oder mehr verringert ist,
wobei die zentrale elektronische Datenverarbeitungseinrichtung dazu eingerichtet ist, eine Reaktionsmaßnahme auszulösen, wenn die Auswertung den Verlust eines dem Systemfahrzeug zugeordneten Systemfahrzeugreifens detektiert.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine schematische Darstellung eines erfindungsgemäßen Überwachungssystems im Einsatz in einem erfindungsgemäßen Verfahren in einer ersten bevorzugten Ausführungsform, und
- Fig. 2: eine schematische Darstellung eines erfindungsgemäßen Überwachungssystems im Einsatz in einem erfindungsgemäßen Verfahren in einer zweiten bevorzugten Ausführungsform.

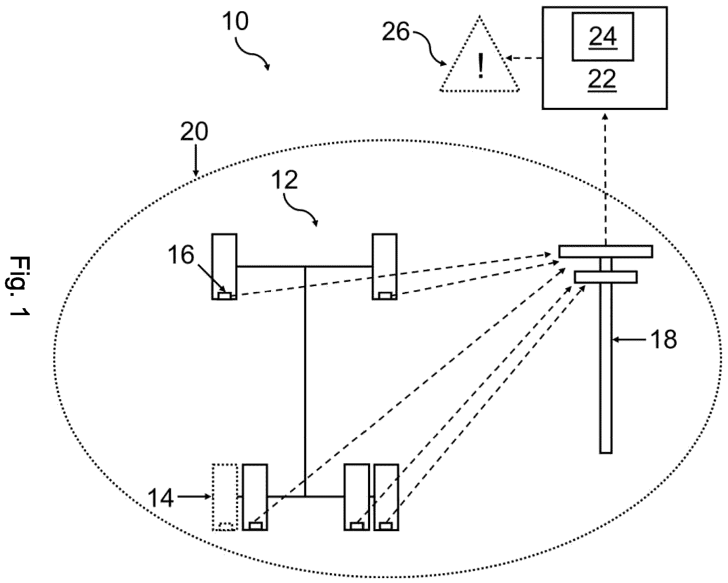

Fig. 1 zeigt ein bevorzugtes erfindungsgemäßes Überwachungssystem 10 in einer bevorzugten Ausgestaltung im Einsatz in einem erfindungsgemäßen Verfahren zur Detektion eines Reifenverlusts.

Das Überwachungssystem 10 ist im gezeigten Beispiel ein Reifendrucküberwachungssystem und umfasst ein Systemfahrzeug 12 mit insgesamt sechs Systemfahrzeugreifen 14, das im gezeigten Beispiel der Fig. 1 als LKW ausgeführt ist. Die Systemfahrzeugreifen 14 umfassen jeweils eine elektronische Sendeeinheit 16 mit einer Drucksensoreinheit zur Bestimmung eines im Systemfahrzeugreifen 14 herrschenden Luftdrucks, das heißt einer Druckinformation. Jeder elektronischen Sendeeinheit 16, das heißt mittelbar jedem Systemfahrzeugreifen 14, ist im Überwachungssystem 10 eine eindeutige Identifikationsnummer zugeordnet.

Zudem umfasst das gezeigte Überwachungssystem 10 eine ortsfeste Kommunikationseinheit 18, die als Funkmast ausgeführt ist und im Beispiel der Fig. 1 einen Kontrollbereich 20 mit einem Radius r von etwa 15 m aufweist. Innerhalb des Kontrollbereichs 20 kann die Kommunikationseinheit 18 in einem drahtlosen Übertragungsverfahren Signale empfangen. Die Kommunikationseinheit 18 ist im gezeigten Beispiel signalleitend mit einer zentralen elektronischen Datenverarbeitungseinrichtung 22 verbunden, die durch einen virtuellen Server gebildet wird und eine zentrale Speichereinheit 24 aufweist.

Zur Detektion eines Reifenverlusts umfasst das erfindungsgemäße Verfahren im gezeigten Beispiel das Senden von Signalen mit den elektronischen Sendeeinheiten 16 über Bluetooth an die Kommunikationseinheit 18, wobei der Abstandzwischen zwei Sendevorgängen etwa 120 s beträgt. Das Signal umfasst dabei jeweils die detektierte Druckinformation und die Identifikationsnummer. Das Signal wird von der Kommunikationseinheit 18 empfangen und über die signalleitende Verbindung an die elektronische Datenverarbeitungseinrichtung 22 weitergeleitet.

In der zentralen Speichereinheit 24 sind Zuordnungsinformationen, das heißt die Identifikationsnummern der elektronischen Sendeeinheiten 16 bzw. Informationen über die Zuordnung der Systemfahrzeugreifen 14 zu den Reifenplätzen des Systemfahrzeugs 12, gespeichert. Anhand der Zuordnungsinformationen wertet die Datenverarbeitungseinrichtung 22 sämtliche empfangenen Signale aus und detektiert dann einen Verlust eines Systemfahrzeugreifens 14, wenn zumindest ein Signal einer dem Systemfahrzeug 12 zugeordneten elektronischen Sendeeinheit 16 nicht empfangen wird oder lediglich mit einer um einen vorbestimmten Dämpfungsfaktor, beispielsweise 75 %, verringerten Signalintensität empfangen wird.

Im gezeigten Beispiel der Fig. 1 ist das von den elektronischen Sendeeinheiten 16 ausgegebene Signal als gestrichelter Pfeil dargestellt. Einer der Systemfahrzeugreifen 14 der Hinterachse fehlt im gezeigten Beispiel gänzlich. Die zugehörige elektronische Sendeeinheit 16 sendet daher kein Signal an die Kommunikationseinheit 18 und die elektronische Datenverarbeitungseinrichtung 22 detektiert den Verlust bzw. Diebstahl des Reifens, da die Signale der sämtlichen weiteren Systemfahrzeugreifen 14 des zugeordneten Systemfahrzeugs 12 weiterhin empfangen werden.

Im Anschluss an die Detektion des Verlusts wird durch die zentrale elektronische Datenverarbeitungseinrichtung 22 eine Reaktionsmaßnahme 26 ausgelöst, infolge der insbesondere die in der zentralen Speichereinheit 24 hinterlegten Zuordnungsinformationen aktualisiert werden, was beispielsweise durch Ausgabe eines optischen und/oder akustischen Warnsignals, insbesondere an ein mobiles Endgerät eines Benutzers des Systemfahrzeugs 12 ergänzt werden kann.

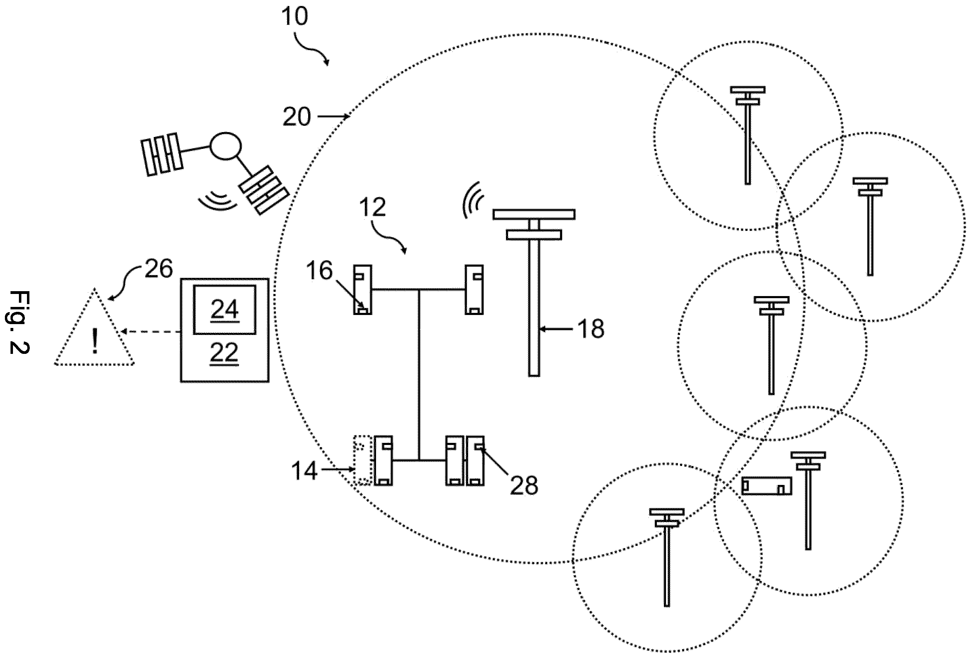

Im gezeigten Beispiel der Fig. 2 umfasst das Überwachungssystem 10 eine Vielzahl an räumlich getrennten, als ortsfeste Funkmasten ausgeführte, Kommunikationseinheiten 18, die jeweils einen deutlich größeren Kontrollbereich 20 von mehr als 100 m aufweisen, von denen die weiter entfernten Masten jedoch aus Gründen der Übersichtlichkeit als kleinere Einheiten dargestellt sind. In diesem Überwachungssystem 10 erfolgt die Kommunikation zwischen den elektronischen Sendeeinheiten 16 der Systemfahrzeugreifen 14 und den Kommunikationseinheiten 18 beispielsweise über Sigfox oder Narrowband IOT.

Aufgrund des erhöhten Energiebedarfs der Übertragungstechnologien weisen die Systemfahrzeugreifen 14 im gezeigten Beispiel der Fig. 2 jeweils unterhalb des Laufstreifens eine Energiegewinnungseinrichtung 28 zur Versorgung der elektronischen Sendeeinheiten 16 mit elektrischer Energie auf, die dazu eingerichtet ist, in Folge der Verformung des Systemfahrzeugreifens 14 elektrische Energie zu gewinnen. In diesem Beispiel kommunizieren die Kommunikationseinheit 18 und die zentrale elektronische Datenverarbeitungseinrichtung 22 über ein drahtloses Kommunikationsverfahren (dargestellt durch den Satelliten in Fig. 2).

Fig. 2 visualisiert schematisch, dass der fehlende Systemfahrzeugreifen im Einflussbereich anderer Funkmasten liegt. Im Beispiel der Fig. 2 kann das Überwachungssystem 10 die Position der elektronischen Sendeeinheiten 16 des als verloren detektierten Systemfahrzeugreifen 14 auf Basis der gesendeten Signale der elektronischen Sendeeinheit 16 abschätzen, da die Position der Kommunikationseinheit 18 bekannt ist, die dessen Signal empfängt. Die Reaktionsmaßnahme 26 kann beispielsweise darin bestehen, die so ermittelte Position der elektronischen Sendeeinheiten 16 des als verloren detektierten Systemfahrzeugreifen 14 an die Strafverfolgungsbehörden zu übermitteln.

### Bezugszeichenliste

- 10: Überwachungssystem
- 12: Systemfahrzeug
- 14: Systemfahrzeugreifen
- 16: elektronische Sendeeinheit
- 18: Kommunikationseinheit
- 20: Kontrollbereich
- 22: zentrale elektronische Datenverarbeitungseinrichtung
- 24: zentrale Speichereinheit
- 26: Reaktionsmaßnahme
- 28: Energiegewinnungseinrichtung

## Patentansprüche

1. Verfahren zur Detektion eines Reifenverlusts in einem Überwachungssystem (10), wobei das Überwachungssystem (10) umfasst:
i) ein oder mehrere Systemfahrzeuge (12), umfassend jeweils eine Mehrzahl von Systemfahrzeugreifen (14), wobei jeder Systemfahrzeugreifen (14) eine elektronische Sendeeinheit (16) zum Senden von Signalen in einem drahtlosen Übertragungsverfahren umfasst,
ii) zumindest eine von den Systemfahrzeugen (12) separate Kommunikationseinheit (18), wobei die Kommunikationseinheit (18) dazu eingerichtet ist, in dem drahtlosen Übertragungsverfahren die Signale von in einem Kontrollbereich (20) befindlichen elektronischen Sendeeinheiten (16) der Systemfahrzeugreifen (14) zu empfangen, und
iii) eine zentrale elektronische Datenverarbeitungseinrichtung (22), umfassend eine zentrale Speichereinheit (24), wobei auf der zentralen Speichereinheit (24) Zuordnungsinformationen über die Zuordnung der elektronischen Sendeeinheiten (16) der Systemfahrzeugreifen (14) zu den Systemfahrzeugen (12) gespeichert sind,
wobei das Überwachungssystem (10) dazu eingerichtet ist, dass im Kontrollbereich (20) befindliche elektronische Sendeeinheiten (16) über die Kommunikationseinheit (18) Signale an die zentrale elektronische Datenverarbeitungseinrichtung (22) senden können, wobei das Verfahren die folgenden Verfahrensschritte umfasst:
a) Senden von Signalen mit den elektronischen Sendeeinheiten (16) der an einem Systemfahrzeug (12) angeordneten Systemfahrzeugreifen (14) über die zumindest eine Kommunikationseinheit (18) an die zentrale elektronische Datenverarbeitungseinrichtung (22),
b) Auswerten der von den elektronischen Sendeeinheiten (16) eines Systemfahrzeugs (12) empfangenen Signale mit der zentralen elektronischen Datenverarbeitungseinrichtung (20) zur Detektion eines möglichen Verlusts eines dem Systemfahrzeug (12) zugeordneten Systemfahrzeugreifens (14), und
c) Auslösen einer Reaktionsmaßnahme (26) durch die zentrale elektronische Datenverarbeitungseinrichtung (22), wenn die Auswertung den Verlust eines dem Systemfahrzeug (12) zugeordneten Systemfahrzeugreifens (14) detektiert,
wobei der Verlust eines dem Systemfahrzeug (12) zugeordneten Systemfahrzeugreifens (14) detektiert wird, wenn eine Kommunikationseinheit (18), welche die Signale eines Teils der dem Systemfahrzeug (12) zugeordneten elektronischen Sendeeinheiten (16) empfängt, die Signale zumindest einer weiteren, dem Systemfahrzeug (12) zugeordneten elektronischen Sendeeinheit (16) nicht empfängt oder mit einer Signalintensität empfängt, welche zumindest um einen vorbestimmten Dämpfungsfaktor verringert ist.

2. Verfahren nach Anspruch 1, wobei die Systemfahrzeugreifen (14) jeweils eine elektronische Sensoreinheit zum Detektieren einer Reifeninformation umfassen.

3. Verfahren nach Anspruch 2, wobei die elektronische Sendeeinheit (16) jedes Systemfahrzeugreifens (14) dazu eingerichtet ist in zeitlichen Abständen die detektierte Reifeninformation zu senden.

4. Verfahren nach einem der Ansprüche 1 bis 3, wobei die Systemfahrzeugreifen (14) zumindest teilweise eine Energiegewinnungseinrichtung (28) zur Versorgung der elektronischen Sendeeinheiten (16) mit elektrischer Energie umfassen, wobei die Energiegewinnungseinrichtung (28) dazu eingerichtet ist, in Folge der Verformung des Systemfahrzeugreifens (14) elektrische Energie zu gewinnen.

5. Verfahren nach einem der Ansprüche 1 bis 4, wobei die Kommunikationseinheit (18) eine ortsfeste Kommunikationseinheit (18) ist.

6. Verfahren nach einem der Ansprüche 1 bis 5, wobei das Überwachungssystem (10) eine Vielzahl von räumlich voneinander separierten Kommunikationseinheiten (18) umfasst, wobei der mittlere Abstand zwischen benachbarten Kommunikationseinheiten (18) 100 m oder mehr beträgt,
oder
wobei das Überwachungssystem (10) 15 oder weniger Kommunikationseinheiten (18) umfasst, und wobei der mittlere Abstand zwischen benachbarten Kommunikationseinheiten (18) 75 m oder weniger beträgt.

7. Verfahren nach einem der Ansprüche 1 bis 6, wobei das drahtlose Übertragungsverfahren ausgewählt ist aus der Gruppe bestehend aus 3G, 4G, 5G, Sigfox, LoRaWan und Narrowband IOT,
oder
wobei das drahtlose Übertragungsverfahren ausgewählt ist aus der Gruppe bestehend aus einem Funk-Verfahren mit einer Frequenz von 433 MHz oder Bluetooth.

8. Verfahren nach einem der Ansprüche 1 bis 7, wobei das Überwachungssystem (10) dazu eingerichtet ist, die Position der elektronischen Sendeeinheiten (16) auf Basis der gesendeten Signale der elektronischen Sendeeinheiten (16) zu bestimmen oder abzuschätzen.

9. Verfahren nach einem der Ansprüche 1 bis 8, wobei der Verlust eines dem Systemfahrzeug (12) zugeordneten Systemfahrzeugreifens (14) detektiert wird, wenn die Signale zumindest einer weiteren, bevorzugt genau einer weiteren, dem Systemfahrzeug (12) zugeordneten elektronischen Sendeeinheiten (16) nicht oder mit einer um einen vorbestimmten Dämpfungsfaktor von 75 % oder mehr verringerten Signalintensität empfangen werden.

10. Verfahren nach einem der Ansprüche 1 bis 9, wobei die Systemfahrzeugreifen des Systemfahrzeugs untereinander zumindest teilweise in einem nahreichweitigen, drahtlosen Kommunikationsnetzwerk kommunizieren, wobei das Überwachungssystem dazu eingerichtet ist, die Verfahrensschritte des Verfahrens auszuführen, wenn die Systemfahrzeugreifen im drahtlosen Kommunikationsnetzwerk für eine vorgegeben Zeitspanne von einem oder mehreren der Systemfahrzeugreifen kein Kommunikationssignal empfangen haben.

11. Überwachungssystem (10), insbesondere für den Einsatz in einem Verfahren nach einem der Ansprüche 1 bis 10, umfassend:
i) ein oder mehrere Systemfahrzeuge (12), umfassend jeweils eine Mehrzahl von Systemfahrzeugreifen (14), wobei jeder Systemfahrzeugreifen (14) eine elektronische Sendeeinheit (16) zum Senden von Signalen in einem drahtlosen Übertragungsverfahren umfasst,
ii) zumindest eine von den Systemfahrzeugen (12) separate Kommunikationseinheit (18), wobei die Kommunikationseinheit (18) dazu eingerichtet ist, in dem drahtlosen Übertragungsverfahren die Signale von in einem Kontrollbereich (20) befindlichen elektronischen Sendeeinheiten (16) der Systemfahrzeugreifen (14) zu empfangen, und
iii) eine zentrale elektronische Datenverarbeitungseinrichtung (22), umfassend eine zentrale Speichereinheit (24), wobei auf der zentralen Speichereinheit (24) Zuordnungsinformationen über die Zuordnung der elektronischen Sendeeinheiten (16) der Systemfahrzeugreifen (14) zu den Systemfahrzeugen (12) gespeichert sind,
wobei das Überwachungssystem (10) dazu eingerichtet ist, dass im Kontrollbereich (20) befindliche elektronische Sendeeinheiten (16) über die Kommunikationseinheit (18) Signale an die zentrale elektronische Datenverarbeitungseinrichtung (22) senden können,
wobei die zentrale elektronische Datenverarbeitungseinrichtung (22) dazu eingerichtet ist, die von den elektronischen Sendeeinheiten (16) eines Systemfahrzeugs (12) empfangenen Signale auszuwerten und einen möglichen Verlust eines dem Systemfahrzeug (12) zugeordneten Systemfahrzeugreifens (14) zu detektieren, wobei der Verlust eines dem Systemfahrzeug (12) zugeordneten Systemfahrzeugreifens (14) detektiert wird, wenn eine Kommunikationseinheit (18), welche die Signale eines Teils der dem Systemfahrzeug (12) zugeordneten elektronischen Sendeeinheiten (16) empfängt, die Signale zumindest einer weiteren, dem Systemfahrzeug (12) zugeordneten elektronischen Sendeeinheit (16) nicht empfängt oder mit einer Signalintensität empfängt, welche um 50 % oder mehr verringert ist,
wobei die zentrale elektronische Datenverarbeitungseinrichtung (22) dazu eingerichtet ist, eine Reaktionsmaßnahme (26) auszulösen, wenn die Auswertung den Verlust eines dem Systemfahrzeug (12) zugeordneten Systemfahrzeugreifens (14) detektiert.
